(19) **Europäisches Patentamt / European Patent Office / Office européen des brevets**

(11) **EP 1 815 582 B1**

(12) **EUROPEAN PATENT SPECIFICATION**

(45) Date of publication and mention
of the grant of the patent:
**25.03.2009 Bulletin 2009/13**

(51) Int Cl.:
**H02M 3/335** (2006.01)

(21) Application number: **05798650.7**

(22) Date of filing: **03.11.2005**

(86) International application number:
**PCT/IB2005/053590**

(87) International publication number:
**WO 2006/051450 (18.05.2006 Gazette 2006/20)**

(54) **PRE-CONDITIONER WITH LOW VOLTAGE COMPONENTS**

VORKONDITIONIERER MIT NIEDERSPANNUNGSBAUTEILEN

PRECONDITIONNEUR A COMPOSANTS FAIBLE TENSION

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.11.2004 EP 04105644**

(43) Date of publication of application:
**08.08.2007 Bulletin 2007/32**

(73) Proprietors:
• **Koninklijke Philips Electronics N.V.**
**5621 BA Eindhoven (NL)**
Designated Contracting States:
**AT BE BG CH CY CZ DK EE ES FI FR GB GR HU IE IS IT LI LT LU LV MC NL PL PT RO SE SI SK TR**
• **Philips Intellectual Property & Standards GmbH**
**20099 Hamburg (DE)**
Designated Contracting States:
**DE**

(72) Inventor: **LUERKENS, Peter**
**NL-5656 AA Eindhoven (NL)**

(74) Representative: **Damen, Daniel Martijn**
**Philips**
**Intellectual Property & Standards**
**P.O. Box 220**
**5600 AE Eindhoven (NL)**

(56) References cited:
**WO-A-20/04057743**     **US-A- 5 847 949**

**Description**

This invention relates generally to a pre-conditioner or DC-to-DC converter which enables an application to operate with a wide range of input voltages.

A power supply is a device for the conversion of available power of one set of characteristics to another set of characteristics to meet specified requirements. Typical applications of power supplies include converting raw input power to a controlled stabilised voltage and/or current for the operation of electronic equipment.

Sometimes, a power supply is a buffer circuit that provides power with the characteristics required by the load from a primary power source with characteristics incompatible with the load, thereby making the load compatible with its power source. This buffer circuit is often termed a line conditioner or pre-conditioner.

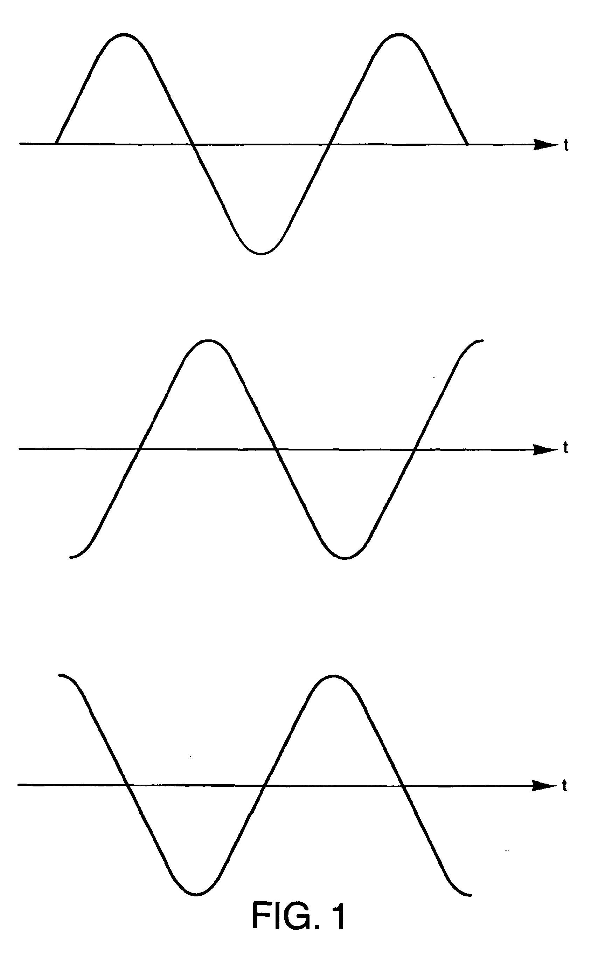

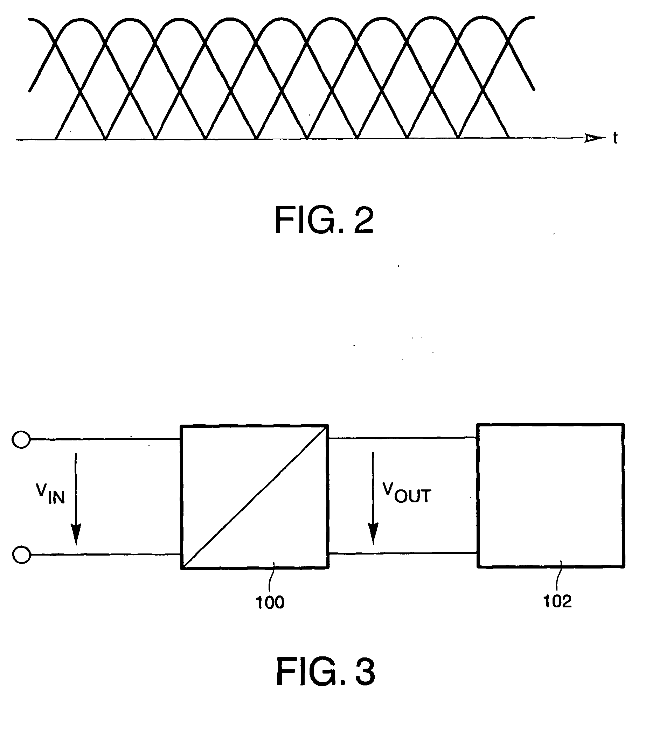

The simplest unregulated power supply consists of three parts: the transformer, the rectifiers and the capacitors. This kind of power supply is simple, but the resultant output voltage is not very stable (there can be a noticeable ripple in the output, and the output voltage changes with load changes and mains voltage changes). Medium power applications, such as X-ray generators and the like, are normally supplied by a three-phase utility network with a typical supply voltage of approximately 400V between phases. A three-phase alternating current (AC) line source is effectively supplied via three wires, each with a single phase AC that is one third cycle (120°) out of phase with the other two, as illustrated schematically in Figure 1 of the drawings. A three-phase transformer is used in this type of application that has three sets of primary windings and three sets of secondary windings, i.e. in effect three separate high voltage interconnected transformers, and a rectifier network is employed to give a rectified output such as that illustrated in Figure 2 of the drawings. A smoothing circuit, such as a capacitor connected in parallel with the load, is generally used to smooth the output waveform.

In the case of the above-mentioned three-phase utility network with a typical supply voltage of approximately 400V between phases, and considering all possible voltage variations, this leads to a rectified voltage ranging from around 400 - 750 $V_{DC}$. As a result, the power components of the subsequent application have need to be designed such that they will withstand the maximum voltage in this range and still deliver the required power at the minimum voltage. However, this excludes the usage of standard 500 V components and also requires a lot of over-dimensioning to provide the rated power at the lower voltages in the range.

Usually, in order to overcome some of these problems, some form of pre-conditioner is used to limit the input voltage to a reasonable range, or to raise the input voltage to a constant value, so as to eliminate the need for over-dimensioning in the subsequent circuitry. Referring to Figure 3 of the drawings, a classical pre-conditioner configuration comprises a pre-conditioner or DC-to-DC converter module 100, connected to the power source $V_{IN}$, for generating a modified output voltage $V_{OUT}$ for use in the main application 102. In general, the maximum voltage $V_{IN}$ appearing at the power components of the pre-conditioner module 100 is at least the maximum voltage difference between any two terminals.

Many different types of pre-conditioner are known, which are typically DC-to-DC converters for stepping up the input voltage, stepping down the input voltage and/or maintaining the voltage supplied to the main application at a substantially constant level. In fact, US Patent No. 5,847,949 describes a boost converter for converting an input voltage received at an input thereof into first and second output voltages provided at first and second respective outputs thereof to respective portions of the main application.

One of the main disadvantages of the conventional solutions is that, although it is no longer necessary to design the components of the main application 102 to withstand the maximum input voltage while still delivering the desired power at the minimum voltage in the range, it is still necessary for the components of the pre-conditioning module 100 to be designed and over-dimensioned in this manner. In other words, the pre-conditioner module 100 is required to be designed to operate correctly within the wide input voltage range, and the same disadvantages in terms of component size and cost are encountered in this case as in the case where the application circuitry itself needs to be designed to withstand the full input voltage range.

We have now devised an improved arrangement, and it is an object of the present invention to provide pre-conditioning apparatus for an electrical application, which enables the application to operate within a relatively wide range of input voltages without the need for the components of either pre-conditioning apparatus or the electrical application to be specially designed to withstand the higher input voltages in the range and still deliver the desired power at the lower voltages in the range.

In accordance with the present invention, there is provided a pre-conditioner circuit having input terminals for receiving an input voltage, said pre-conditioner being for modifying said input voltage for application to a load, the pre-conditioner circuit comprising at least two pre-conditioner modules, each having an input and an output for connection to a respective load module, the output of each of said pre-conditioner modules being coupled in series with the input of another of said pre-conditioner modules, such that the input of each pre-conditioner module is dependent upon the pre-conditioner module output coupled thereto.

The present invention extends to a power supply module comprising a pre-conditioner circuit as defined above.

The proposed can be understood as being able to realise effectively a gradual transition from a series to a parallel connection of load modules, depending on control, as will be apparent from the description herein.

Control means are beneficially provided for controlling the output of each of the pre-conditioner modules, and thereby controlling the input of the pre-conditioner modules to which said outputs are connected, by connecting one or more of said load modules in series and/or parallel. In other words, by the particular interconnection of the pre-conditioner (and load) module, an arbitrary series or parallel connection of the load modules can be achieved. This means that the maximum voltage occurring at any power component can be reduced to a maximum of 1/2 of modules by realising a full series connection of the load modules. At the same time, if the input voltage is low, a parallel connection of the load modules can be configured accordingly, such that over-dimensioning can also be avoided.

In one exemplary embodiment of the present invention, each of said pre-conditioner modules comprises switching means for alternately switching a respective pre-conditioner module on and off, and a control circuit is provided for controlling the duty cycle of said switching means. The control circuit is preferably arranged to switch said switching means of each pre-conditioner module with substantially the same pattern, which is phase-shifted by 180° (i.e. 360°/2), which results in reduced ripple in the converter's input current and lower stress on the high frequency components. The pre-conditioner modules may, for example, comprise step-up converters.

These and other aspects of the present invention will be apparent from, and elucidated with reference to, the embodiment described herein.

An embodiment of the present invention will now be described by way of example only and with reference to the accompanying drawings, in which:

Figure 1 is a schematic illustration of the separate components of a three-phase voltage supply;
Figure 2 is a schematic illustration of the three-phase rectified voltage;
Figure 3 is a schematic block diagram of a pre-conditioner configuration relative to an electrical application according to the prior art;
Figure 4 is a schematic block diagram of a pre-conditioner configuration relative to an electrical application according to an exemplary embodiment of the present invention;
Figure 5 is a schematic circuit diagram illustrating a specific realisation of the pre-conditioner configuration of Figure 4;
Figure 6 illustrates the inductor and capacitor current and input current in respect of the circuit of Figure 5; and
Figure 7 illustrates the input and output voltages and switch voltage of the circuit of Figure 5.

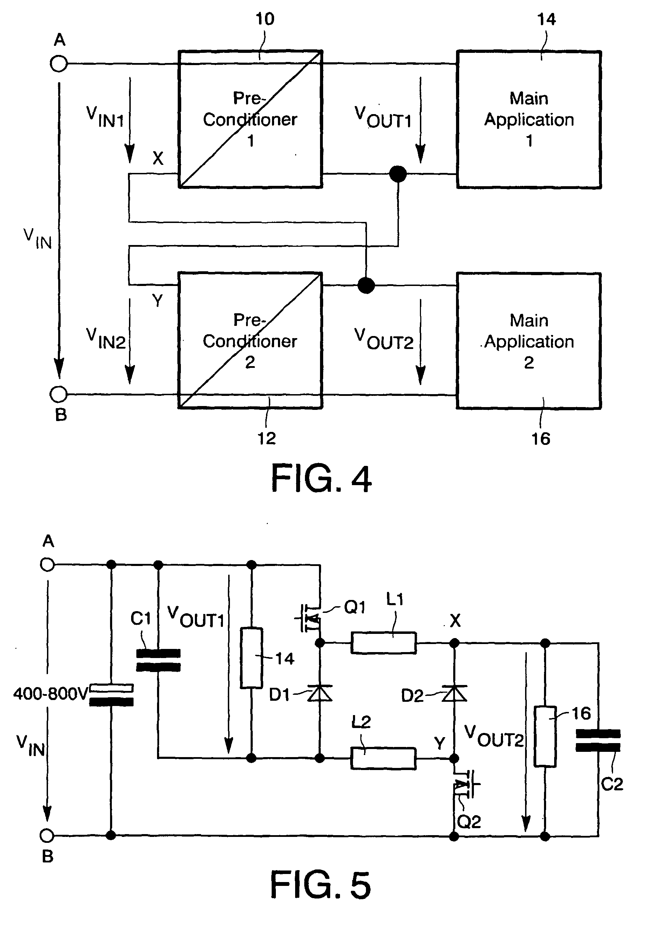

Referring to Figure 4 of the drawings, a typical pre-conditioner arrangement according to an exemplary embodiment of the present invention comprises a DC supply (denoted by $V_{IN}$) across which is connected first and second pre-conditioner modules (or DC-DC converters) 10, 12 each having respective input terminals (denoted by $V_{IN1}$ and $V_{IN2}$ respectively) and output terminals (denoted by $V_{OUT1}$ and $V_{OUT2}$ respectively). The output terminals of the pre-conditioner modules 10, 12 are connected to first and second respective main applications 14, 16. As shown, the output $V_{OUT1}$ of the first pre-conditioner module 10 is connected in series with the input of the second pre-conditioner module 12, and the output $V_{OUT2}$ of the second pre-conditioner module 12 is connected in series with the input of the first pre-conditioner module 10. It is further assumed that the first pre-conditioner module 10 produces an output whose upper voltage rail has the same electrical potential as the upper voltage rail of the input voltage, while the second pre-conditioner module 12 produces an output whose lower voltage rail has the same electrical potential as the lower voltage rail of the input voltage.

As a result, the maximum input voltage to each of the pre-conditioner modules 10, 12 is reduced relative to the supply input $V_{IN}$. In particular, the input voltage of the first pre-conditioner module 10 follows the rule:

$$V_{IN1} = V_{IN} - V_{OUT2}$$

and the input voltage of the second pre-conditioner module 12 follows the rule:

$$V_{IN2} = V_{IN} - V_{OUT1}.$$

Depending on the topology of the pre-conditioner modules 10, 12, it is possible to determine the resultant useful range of the voltage $V_{OUT}$ for each pre-conditioner module. For example, if the pre-conditioner modules 10, 12 comprise up-converters, i.e. its input voltage is always less than its output voltage, it is possible to obtain a range for $V_{OUT}$ for each pre-conditioner module, as follows:

$$0 < V_{IN1/2} = V_{IN} - V_{OUT} < V_{OUT} \Rightarrow V_{IN}/2 < V_{OUT} < V_{IN}$$

In other words, by control, it is possible to reduce $V_{OUT}$ of each up-converter if the respective $V_{IN}$ thereof is too high but not less than $V_{IN}/2$.

Referring to Figure 5 of the drawings, there is illustrated a practical circuit implementation of the architecture illustrated in Figure 4. In the case of the circuit of Figure 5, the main applications 14, 16 (i.e. the loads) are considered to be simple resistors, and the pre-conditioner modules 10, 12 are of the up-converter type to provide an output voltage as outlined above.

The basic components of an up-converter (or step-up converter) consist of an inductor, a transistor (i.e. a switch) and a diode. Thus, in the circuit of Figure 5, the pre-conditioner module 1 comprises a capacitor C1 connected in parallel with a resistor 14. The switch is provided by an n-channel IGFET (Insulated Gate Field Effect Transistor) Q1, in respect of which a diode D1 is provided. Similarly, pre-conditioner module 2 comprises capacitor C2, resistor 16, switch Q2 and diode D2. $V_{IN1}$ appears between nodes A and X and $V_{IN2}$ appears between nodes B and Y, and $V_{OUT1}$ and $V_{OUT2}$ are dropped across loads 14, 16 respectively, as shown.

A control circuit (not shown) is provided to control switching of the transistors Q1, Q2, whereby control of the pre-conditioner modules is realised by the duty cycle of the power transistors Q1, Q2. In a preferred embodiment, both transistors Q1, Q2 are switched with a pattern that is phase-shifted by 180°, which results in a reduced ripple in respect of each converter's input current and lower stress on the filter capacitors.

An understanding of the functioning of the circuit can be obtained by looking at two extreme cases first. The first extreme case considers both power transistors Q1, Q2 constantly turned off. In this case the supply current first flows through the load resistor 14. It then separates into two fractions, one flowing over diode D1 and inductor L1, the other over inductor L2 and diode D2. In the joint of D2 and L1 the two fractions are united again, thereafter the current flows through the load resistor 16 to ground. In effect, the load modules are now connected in series, meaning the each load module accepts half of the input voltage $V_{IN}$.

In the second extreme case the two power transistors are considered turned on continuously. In this case the load resistor 14 is connected to ground over inductor L2 and transistor Q2. The inductor L1 remains ineffective for the average current. The load resistor 16 is connected to the high side supply voltage over inductor L1 and transistor Q1. In effect the two load resistors are connected in parallel, meaning that each load module accepts the full input voltage.

By adjusting the duty cycle of the two power transistors in between the two boundary cases, an adjustable supply voltage $V_{IN1}$, $V_{IN2}$ of the two load modules between 50% and 100% of the input voltage $V_{IN}$ can be achieved.

It will be apparent from the circuit illustrated in Figure 5 that:

$$V_{IN1} = V_{IN} - V_{OUT2}$$

and

$$V_{IN2} = V_{IN} - V_{OUT1}$$

as described with reference to the architecture illustrated in Figure 4.

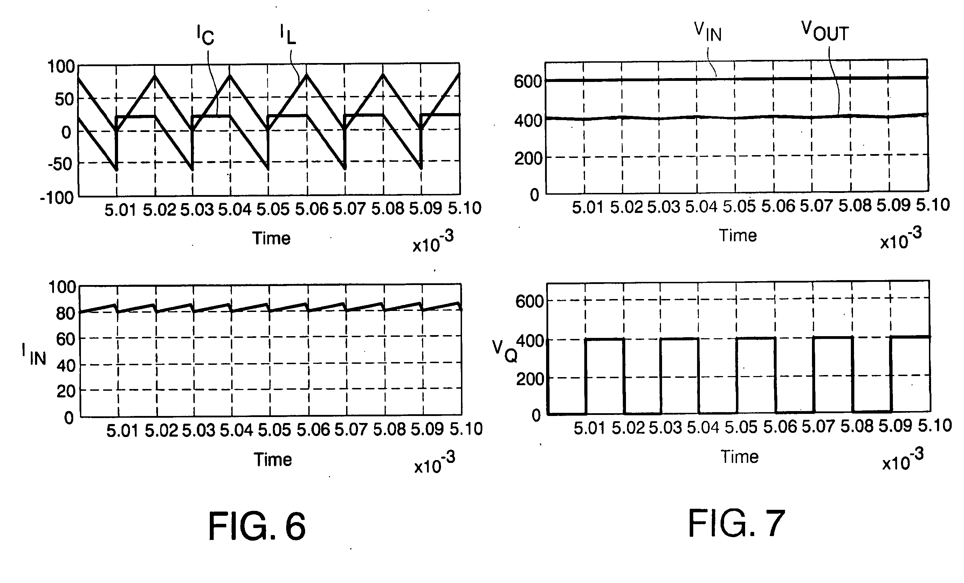

Figure 6 illustrates typical current waveforms $I_L$ in one of the inductors and $I_C$ in the filter capacitor, and also $I_{IN}$ at the input, and Figure 7 illustrates the corresponding voltages $V_{IN}$ and $V_{OUT}$, as well as the switch voltage $V_Q$. It can be seen that, even at the higher input voltage, the voltage at the power switch (Q1 or Q2) is only 400V.

Thus, the present invention takes advantage of the fact that a large number of applications can be separated into two equal sub-modules, and this is done with the pre-conditioner module. By the special arrangement of the pre-conditioner and load modules, an arbitrary series or parallel connection of the modules can be achieved. This means that the maximum voltage, occurring at any power component, can be reduced to a maximum of half of the input voltage by realising a full series connection of the load modules. This enables 500V (and theoretically even 400V) components when a maximum input voltage of, say, 800V has to be taken into consideration. At the same time, the sliding configuration of the modules, allows for a parallel connection when the input voltage is low. As a result, low voltage components can be used and, at the same time, over-dimensioning can be avoided.

The present invention is considered to be particularly useful for use with X-ray generators, as these are typically supplied by a weak three-phase utility network, where a large input voltage range has to be considered. The arrangement of the present invention permits the use of 500V components in the entire generator except the input rectifier. This reduces cost and keeps losses low. Other potential applications include telecommunications power supplies, that also have a high degree of parallelization and are required to cover a wide input voltage range.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A pre-conditioner circuit having input terminals for receiving an input voltage (Vin), said pre-conditioner being for modifying said input voltage (Vin) for application to a load, the pre-conditioner circuit comprising at least two pre-conditioner modules (10, 12), each having an input (Vin1, Vin2) and an output (Vout1, Vout2) for connection to a respective load module (14, 16), the output of each of said pre-conditioner modules (10, 12) being coupled in series with the input of another of said pre-conditioner modules (10, 12), such that the input of each pre-conditioner module (10, 12) is dependent upon the pre-conditioner module output (Vout1, Vout2) coupled thereto.

2. A circuit according to claim 1, comprising means for enabling the output (Vout2, Vout1) of each of the pre-conditioner modules (10, 12) and thereby the input (Vin1, Vin2) of the pre-conditioner modules (12, 10) to which said outputs (Vout2, Vout1) are connected, to be controlled by connecting one or more of said load modules (14, 16) in series and/or parallel.

3. A circuit according to claim 1, wherein each of said pre-conditioner modules (10, 12) comprises switching means (Q1, Q2) for alternately switching a respective pre-conditioner module (10, 12) on and off, and a control circuit is provided for controlling the duty cycle of said switching means (Q1, Q2).

4. A circuit according to claim 3, wherein the control circuit is arranged to switch said switching means (Q1, Q2) of each pre-conditioner module (10, 12) with substantially the same pattern, which is phase-shifted.

5. A circuit according to claim 4, wherein said phase shift is substantially 180°.

6. A circuit according to claim 1, wherein said pre-conditioner modules (10, 12) comprise step-up converters.

7. A power supply module comprising a pre-conditioner circuit according to claim 1.

## Patentansprüche

1. Vorkonditioniererschaltung mit Eingangsanschlüssen zum Empfangen einer Eingangsspannung (Vin), wobei der genannte Vorkonditionierer zum Modifizieren der genannten Eingangsspannung (Vin) zum Anlegen an eine Last vorgesehen ist und wobei die Vorkonditioniererschaltung mindestens Folgendes umfasst: zwei Vorkonditionierermodule (10, 12), jeweils mit einem Eingang (Vin1, Vin2) und einem Ausgang (Vout1, Vout2) zum Verbinden mit einem jeweiligen Lastmodul (14, 16), wobei der Ausgang von jedem der genannten Vorkonditionierermodule (10, 12) in Reihe mit dem Eingang des anderen der genannten Vorkonditionierermodule (10, 12) geschaltet ist, so dass der Eingang jedes Vorkonditionierermoduls (10, 12) von dem hiermit gekoppelten Vorkonditionierermodul-Ausgang (Vout1, Vout2) abhängig ist.

2. Schaltung nach Anspruch 1, mit Mitteln, um zu ermöglichen, dass der Ausgang (Vout2, Vout1) von jedem der Vorkonditionierermodule (10, 12) und damit der Eingang (Vin1, Vin2) der Vorkonditionierermodule (12, 10), mit dem die genannten Ausgänge (Vout2, Vout1) verbunden sind, gesteuert werden können, indem eines oder mehrere der genannten Lastmodule (14, 16) in Reihe und/oder parallel geschaltet werden.

3. Schaltung nach Anspruch 1, wobei jedes der genannten Vorkonditionierermodule (10, 12) Schaltmittel (Q1, Q2) zum abwechselnden Ein- und Ausschalten eines betreffenden Vorkonditionierermoduls (10, 12) umfasst, und wobei eine Steuerschaltung zum Steuern des Tastgrads der genannten Schaltmittel (Q1, Q2) vorgesehen ist.

4. Schaltung nach Anspruch 3, wobei die Steuerschaltung vorgesehen ist, um die genannten Schaltmittel (Q1, Q2) jedes Vorkonditionierermoduls (10, 12) mit im Wesentlichen dem gleichen Muster zu schalten, das phasenverschoben ist.

5. Schaltung nach Anspruch 4, wobei die genannte Phasenverschiebung im Wesentlichen 180° beträgt.

6. Schaltung nach Anspruch 1, wobei die genannten Vorkonditionierermodule (10, 12) Aufwärts-Umsetzer umfassen.

7. Stromversorgungsmodul mit einer Vorkonditioniererschaltung nach Anspruch 1.

**Revendications**

1. Circuit de preconditionnement ayant des bornes d'entrée pour recevoir une tension d'entrée (Vin), ledit préconditionneur étant destiné à modifier ladite tension d'entrée (Vin) pour être appliquée à une charge, le circuit de préconditionnement comprenant au moins deux modules de préconditionnement (10, 12) ayant chacun une entrée (Vin1, Vin2) et une sortie (Vout1, Vout2) pour être connectées à un module de charge respectif (14, 16), la sortie de chacun desdits modules de préconditionnement (10, 12) étant couplée en série à l'entrée d'un autre desdits modules de préconditionnement (10, 12) de telle façon que l'entrée de chaque module de préconditionnement (10, 12) est dépendante de la sortie (Vout1, Vout2) du module de préconditionnement qui y est couplée.

2. Circuit selon la revendication 1, comprenant des moyens pour permettre que la sortie (Vout2, Vout1) de chacun des modules de préconditionnement (10, 12) et de ce fait l'entrée (Vin1, Vin2) des modules de préconditionnement (12, 10) à laquelle lesdites sorties (Vout2, Vout1) sont connectées soient commandées par la connexion d'un ou de plusieurs desdits modules de charge (14, 16) en série et/ou en parallèle.

3. Circuit selon la revendication 1, dans lequel chacun desdits modules de préconditionnement (10, 12) comprend des moyens de commutation (Q1, Q2) pour mettre alternativement un module respectif de préconditionnement (10, 12) en circuit et hors circuit et dans lequel un circuit de commande est prévu pour commander le rapport cyclique desdits moyens de commutation (Q1, Q2).

4. Circuit selon la revendication 3, dans lequel le circuit de commande est agencé de manière à commuter lesdits moyens de commutation (Q1, Q2) de chaque module de préconditionnement (10, 12) avec sensiblement la même configuration qui est décalée en phase.

5. Circuit selon la revendication 4, dans lequel ledit décalage de phase est sensiblement égal à 180°.

6. Circuit selon la revendication 1, dans lequel lesdits modules de préconditionnement (10, 12) comprennent des convertisseurs élévateurs.

7. Module d'alimentation en énergie comprenant un circuit de préconditionnement selon la revendication 1.

FIG. 1

# FIG. 2

$V_{IN}$

$V_{OUT}$

100

102

# FIG. 3

FIG. 4

FIG. 5

FIG. 6

FIG. 7

EP 1 815 582 B1

**EP 1 815 582 B1**

**REFERENCES CITED IN THE DESCRIPTION**

**Patent documents cited in the description**

• US 5847949 A